Europäisches Patentamt

European Patent Office

Office européen des brevets

(11) Veröffentlichungsnummer: **0 266 584**
**A2**

(12) **EUROPÄISCHE PATENTANMELDUNG**

(21) Anmeldenummer: 87114896.1

(22) Anmeldetag: 13.10.87

(51) Int. Cl.⁴: **B29C 45/17 , B02C 18/44**

(30) Priorität: 05.11.86 DE 3637612

(43) Veröffentlichungstag der Anmeldung:
**11.05.88 Patentblatt 88/19**

(84) Benannte Vertragsstaaten:
**AT CH DE FR GB IT LI NL**

(71) Anmelder: **Hehl, Karl**
**Arthur-Hehl-Strasse 32**
**D-7298 Lossburg-1(DE)**

(72) Erfinder: **Hehl, Karl**
**Arthur-Hehl-Strasse 32**
**D-7298 Lossburg-1(DE)**

(74) Vertreter: **Mayer, Friedrich, Dr. et al**
**Patentanwälte Dr. Mayer & Frank Westliche**
**24**
**D-7530 Pforzheim(DE)**

(54) **Kunststoff-Spritzgiessmaschine mit eingebauter Zerkleinerungseinrichtung für die Angüsse.**

(57) Eine in den Maschinenfuß der Kunststoff-Spritzgießmaschine eingebaute Zerkleinerungseinrichtung für die von den Spritzlingen separierten Angüsse mit Antriebsmotor (20), Getriebe (24), Förderschnecke (27,50), Schneidwerk (28) und Regeneratbehälter (41) ist als bauliche Einheit (G) gestaltet, deren in Schließrichtung der Formschließeinheit abgenommene Breite durch den Durchmesser des Antriebsmotors (20) bzw. der Förderschnecke (27,50) bestimmt ist. Die Einheit (G) ist aus dem Maschinenfuß ausziehbar und somit auswechselbar. Dadurch ergeben sich zahlreiche Rationalisierungsmöglichkeiten sowohl im Bereich der Fertigung als auch hinsichtlich der Haltung und des Einsatzes des Maschinenparkes beim Kunden.

FIG.7

EP 0 266 584 A2

## Kunststoff-Spritzgießmaschine mit eingebauter Zerkleinerungseinrichtung für die Angüsse.

Die Erfindung bezieht sich auf eine Kunststoff-Spritzgießmaschine (Spritzgießmaschine) entsprechend dem Oberbegriff des Patentanspruches 1.

Bei einer bekannten Kunststoff-Spritzgießmaschine dieser Art (US-PS 3,672,803) sitzt der Schneidmesserträger des Schneidwerkes unmittelbar auf der Motorachse, die senkrecht zur Förderschnecke angeordnet ist.

Es ist auch eine Zerkleinerungseinrichtung für die beim Spritzgießen anfallenden Angüsse bekannt (FR-OS 2.534.180), bei welcher der Schneidmesserträger ebenfalls (wie beim Gegenstand der US-PS 3,672, 803) auf der Motorachse sitzt, die parallel zur Förderschnecke angeordnet ist. Das Schneidwerk der Zerkleinerungseinrichtung liegt außerhalb des Maschinenfußes der zugehörigen Spritzgießmaschine. Bei einer bekannten Spritzgießmaschine vergleichbarer Art (US-PS 3,407,444) ist die Zerkleinerungseinrichtung derart im Maschinenfuß der Spritzgießmaschine unterhalb der Formschließeinheit angeordnet, daß die Angüsse in das Schneidwerk gelangen können, ohne daß es einer Förderschnecke bedarf. Auch bei dieser Anordnung sitzt der Schneidmesserträger unmittelbar auf der Motorachse.

Bei einer Kunststoff-Spritzgießmaschine vergleichbarer Art (US-PS 3,418,694) ist der Antriebsmotor neben dem Schneidwerk angeordnet, wo er auf dem Gehäuse eines Gebläses sitzt.

Der Erfindung liegt die Aufgabe zugrunde, eine Kunststoff-Spritzgießmaschine der eingangs genannten Art bei üblicher, den Tankraum und eine Separierungseinrichtung einschließenden quaderförmiger Gestaltung des Maschinenfußes derart auszubilden, daß die Zerkleinerungseinrichtung in diesen Maschinenfuß austauschbar eingebaut ist, ohne daß die Abmessungen bzw. die Größe des Maschinenfußes nennenswert verändert werden müßten.

Diese Aufgabe wird erfindungsgemäß durch die im Patentanspruch 1 genannten Merkmale gelöst.

Bei einer solchen Ausbildung ergeben sich zahlreiche Rationalisierungsmöglichkeiten sowohl im Bereich der Fertigung, also beim Maschinenhersteller, als auch hinsichtlich der Haltung und des Einsatzes des Maschinenparkes beim Kunden. In der Fertigung erweist sich die Ausbildung der Zerkleinerungseinrichtung als gesonderte Einheit als kostensenkend, weil sie nunmehr von der Fertigung und der Montage der Kunststoff-Spritzgießmaschine als solcher unabhängig ist, was auch für die Lagerhaltung und für den Verkauf der Zerkleinerungseinrichtung gilt. Zudem besteht die Möglichkeit die Zerkleinerungseinrichtung in Kunststoff-Spritzgießmaschinen unterschiedlichen Typs, ja sogar unterschiedlicher Größe einzusetzen, sofern diese einen für den Einschub der Zerkleinerungseinrichtung geeigneten Maschinenfuß aufweisen.

Im übrigen kann ein Kunde beispielsweise zunächst einen Teil seiner Spritzgießmaschinen ohne die Zerkleinerungseinrichtung beziehen und die zugehörigen Zerkleinerungseinrichtungen zu einem späteren Zeitpunkt kaufen, wenn dies seine finanziellen Mittel erlauben. Beim Einsatz seines Maschinenparkes kann der Kunde auch dann noch rationell arbeiten, wenn zunächst nur ein Teil dieser Spritzgießmaschinen mit Zerkleinerungseinrichtungen ausgerüstet sind; denn er kann in diesem Falle in die für die fehlenden Zerkleinerungseinrichtungen in den Maschinenfüßen vorgesehenen Räume entsprechend gestaltete Behälter einstellen und die aufgefangenen Angüsse mit einer gesonderten Zerkleinerungseinrichtung zerschneiden, die als solche ohne weiteres unabhängig von einer Kunststoff-Spritzgießmaschine benutzbar ist. Vorteilhaft ist auch die Austauschbarkeit der Zerkleinerungseinrichtung im Falle des Wechsels des zu verarbeitenden Kunststoffmaterials; denn in diesem Zusammenhang können mehrere für unterschiedliche Kunststoff verfügbare Zerkleinerungseinrichtungen ausgetauscht werden, so daß sich ihre Reinigung erübrigt. Aber auch dann, wenn eine Reinigung beim Wechsel des Kunststoffmaterials erforderlich ist, kann die diesbezügliche Rüstzeit wesentlich verkürzt werden, indem die beim bisherigen Kunststoff eingesetzte Zerkleinerungseinrichtung mit einer neuen Zerkleinerungseinrichtung ausgetauscht wird. Im Falle eines Defektes in der Zerkleinerungseinrichtung kann diese nach Austausch ohne Zeitdruck und ohne nennenswerte Betriebsausfallzeit repariert werden.

Unbrauchbare Spritzlinge, die vom zentralen Rechner durch den fehlerhaften Ablauf eines Fertigungsparameters als solche erkannt sind, werden in die Zerkleinerungseinrichtung gesteuert. Auf diese Weise kann sichergestellt werden, daß die vom Förderband abtransportierten Spritzlinge einen hohen Qualitätsstandard aufweisen und in jedem Falle brauchbar sind. Da die erfindungsgemäße Ausbildung einen erhöhten Bedarf der Kunststoff-Spritzgießmaschine an Stellplatz vermeidet, sind trotz der Integration der Zerkleinerungseinrichtung raumsparende Gruppierungen der Spritzgießmaschinen möglich, die gemeinsame Transportsysteme für den Wechsel der Spritzgießformen und/oder der Plastifiziereinheiten begünstigen.

Nachstehend wird die Erfindung anhand der Zeichnung an einem Ausführungsbeispiel erläutert. Es zeigen:

Fig. 1,2 Die Kunststoff-Spritzgießmaschine in Seiten-und Rückansicht,

Fig. 3 den Maschinenfuß der Kunststoff-Spritzgießmaschine gemäß Fig. 1 in Draufsicht,

Fig. 4 einen Ausschnitt aus dem Maschinenfuß im Bereich der die Zerkleinerungseinrichtung umfassenden Einheit(G)der Kunststoff-Spritzgießmaschine von dessen Bedienungsseite her gesehen, im Schnitt nach Linie IV-IV von Fig. 6 und in vergrößerter Darstellung,

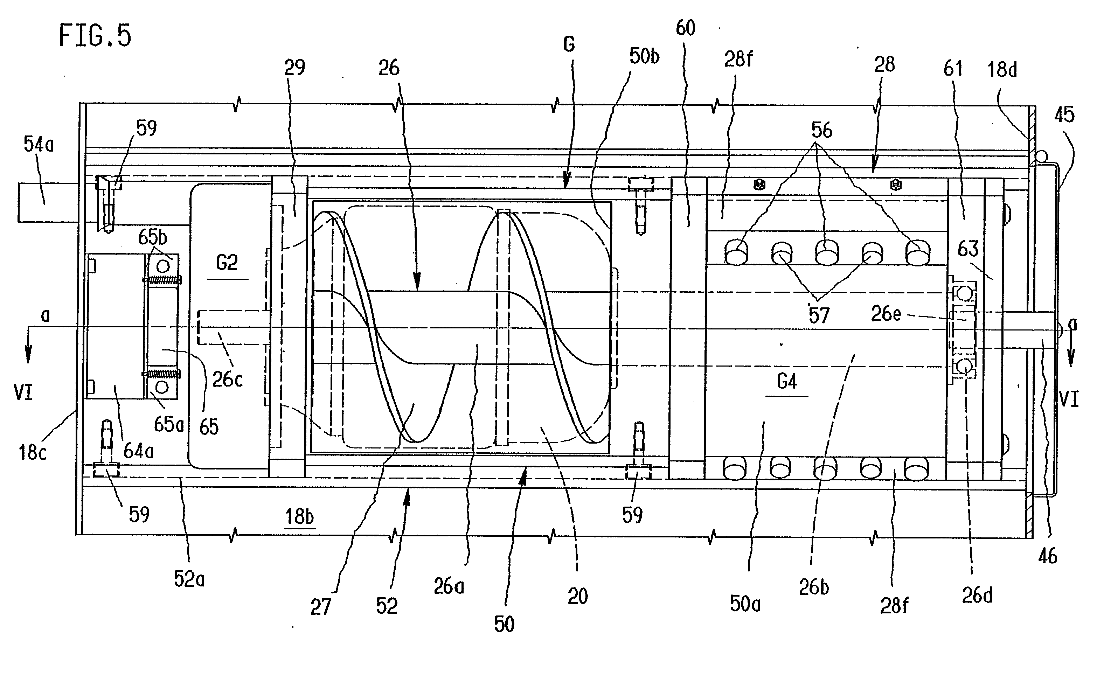

Fig. 5 den Ausschnitt gemäß Fig. 4 in Draufsicht,

Fig. 6 einen Schnitt nach Linie VI-VI von Fig. 5 und

Fig. 7 die Anordnung gemäß Fig. 6 bei teilweise aus dem Maschinenfuß ausgezogener Einheit (G).

Auf dem Maschinenfuß M der Kunststoff-Spritzgießmaschine (Spritzgießmaschine) sind eine horizontale Formschließeinheit F und eine quer zur Trennebene c-c der Spritzgießform 13 arbeitende Spritzgießeinheit S angeordnet. Der stationäre Formträger 12 der Formschließeinheit F ist etwa in der Mitte des Maschinenfußes über dessen senkrecht zur Schließrichtung der Formschließeinheit F stehenden Querwand 18 angeordnet, die einen das Öl für den Hydraulikkreislauf aufnehmenden Tankraum 43 begrenzt. Der Plastifizierzylinder 16 der Spritzgießeinheit ist auf horizontalen Säulen 15, der bewegbare Formträger 11 der Formschließeinheit F auf Säulen 14 verschiebbar. Die Säulen 14 sind einenends am stationären Formträger 12 und anderenends an einer über der Rückwand des Maschinenfußes angeordneten Montageplatte 19 abgestützt welche die hydraulische Antriebseinrichtung 10 für den bewegbaren Formträger 11 trägt. Der aus Stahlblech gefertigte quaderförmige Maschinenfuß ist über dem Tankraum 43 von einem Deckel 18a und im übrigen von der Formschließeinheit F abgedeckt. Unterhalb der Spritzgießform 13 ist im Maschinenfuß M eine Vorrichtung (Separierungsvorrichtung) zum Separieren der Angüsse von den aus der Spritzgießform fallenden Spritzlingen angeordnet. Sie ist durch eine mechanische Weiche gebildet, welche eine horizontale Schwenkachse 35 und eine Platte 36 mit beidseitigen Rutschflächen umfaßt. Die beiden extremen Schwenkstellungen der Platte schließen einen Winkel von 90° ein. In der einen Endstellung bildet die Platte eine Rutsche für die ausfallenden Spritzlinge, die auf einem Förderband 17 endet, das symmetrisch zur Symmetrieebene b-b der Spritzgießmaschine angeordnet ist und diese rückseitig aus dem Maschinenfuß herausfördert. In der anderen Schwenkstellung bildet die Platte 36 eine Rutsche, die über einer als bauliche Einheit G ausgebildeten Zerkleinerungseinrichtung für die Angüsse endet. Die Zerkleinerungseinrichtung umfaßt ein mit einem Antriebsmotor 20 betriebenes Schneidwerk 28,u.eine die Angüsse zum Schneidwerk befördernde Förderschnecke 27,50.Diese ist quer zur Schließrichtung der Formschließeinheit F angeordnet und über ein Getriebe vom Antriebsmotor 20 angetrieben. Die Zerkleinerungseinrichtung umfaßt ferner einen unter dem Schneidwerk 28 angeordneten Behälter (Regeneratbehälter 41). Das Förderband 17 ist auf der von der Spritzgießeinheit S abgewandten Seite der Zerkleinerungseinrichtung angeordnet. Förderschnecke 27,50 und Schneidwerk 28 weisen eine gemeinsame Antriebswelle (Hauptwelle 26) auf. Der Antriebsmotor 20 ist parallel zur Förderschnecke 27 und unter dieser angeordnet. Förderschnecke 27, Schneidwerk 28. Regeneratbehälter 41 und Antriebsmotor 20 bilden die quaderförmige Einheit G. Die in Schließrichtung der Formschließeinheit F abgenommene Breite ist durch den Durchmesser des Antriebsmotors 20 bzw. der durch die Förderwendel 17 und das Förderrohr 50 gebildeten Förderschnecke bestimmt. Motorachse 20a und Hauptwelle 26 liegen in einer gemeinsamen vertikalen Ebene a-a. Diese Ebene a-a ist die Symmetrieebene der baulichen Einheit G. Die quaderförmige Einheit G grenzt an die den Tankraum 43 begrenzenden Querwand 18 des Maschinenfußes M an.

Die dem Förderband 17 für die Spritzlinge zugewandte Breitseite der Einheit G befindet sich etwa in einer durch die Trennebene c-c der geschlossenen Spritzgießform 13 gehenden Ebene c-c. In dieser Ebene liegt etwa die horizontale Schwenkachse 35 der durch die mechanische Weiche gebildeten Separiereinrichtung.

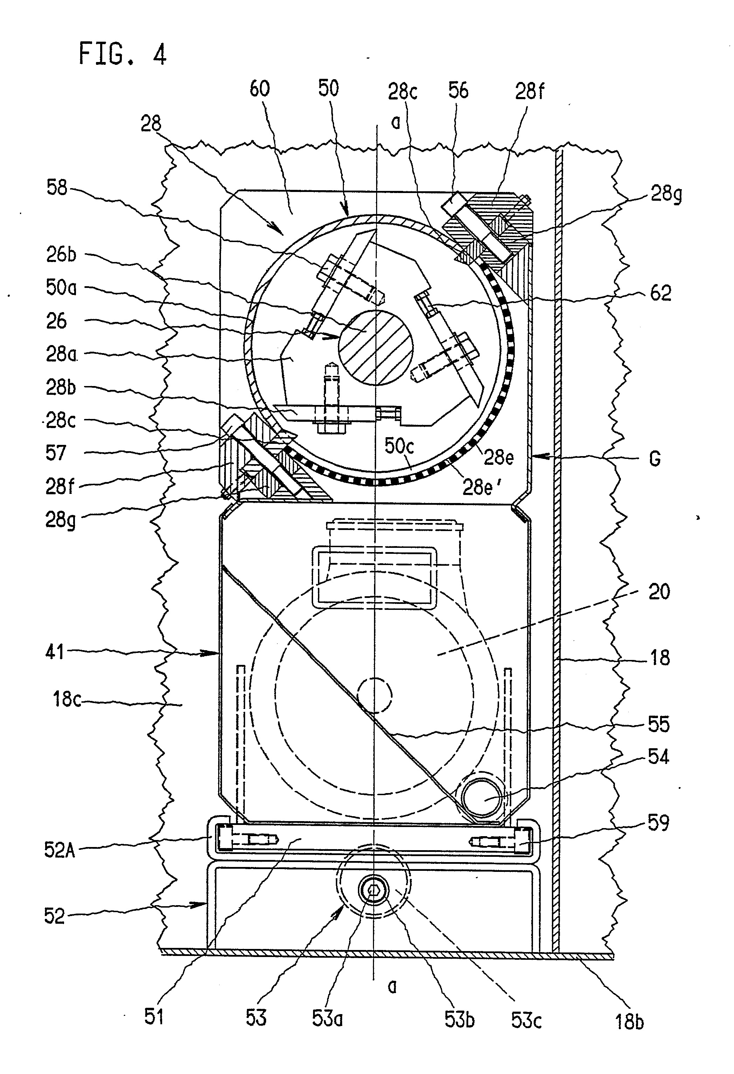

Das tragende Skelett der baulichen Einheit G ist durch eine horizontale Basisplatte 51, eine die Getriebewellen eines Getriebes 24 aufnehmende und mit der Basisplatte 51 starr verbundene Getriebeplatte 29 und das zur Hauptwelle 26 koaxiale und an der Getriebeplatte 29 befestigte Förderrohr 50 der Förderschnecke 27,50 gebildet. Das Gehäuse des Schneidwerkes 28 ist also durch den freien Endabschnitt 50a des Förderrohres 50 der Förderschnecke 27,50 gebildet. Die Getriebeplatte 29 ist motorseitig durch Versteifungswinkel 29b abgestützt, um dieser eine ausreichende Tragfähigkeit für das Schneidwerk 28 zu verleihen. Die Vorgelegewelle 22 des das Drehmoment von der Motorachse 20a auf die Hauptwelle 26 übertragenden Getriebes 24 (mit rückseitigem Deckblech 29a) liegt in der Symmetrieebene der baulichen Einheit G. Das Schneidwerk 28 ist von zwei den Endabschnitt 50a des Förderrohres 50 umschließenden radialen Flanschen axial begrenzt. Diese sind mit dem Mantel des Förderrohres 50 fest verbunden. Der Umfang der Flansche 60,61 beschreibt etwa ein Quadrat. Die Schneidmesser 28b des Schneidwerkes 28 sind auf einem fest auf der Hauptwelle 26 sitzenden Schneidmesserträger 28a angeordnet. Dabei liegen sie auf entsprechenden Anlageflächen des Schneidmesserträgers 28a an, die tangential zur Hauptwelle 26 liegen. Mit diesen tangentialen Anlageflächen sind die Schneidmesser 28b mittels Spannschrauben 58 verspannt, die senkrecht zu diesen stehen. In der Ebene der Schneidmesser, also tangential zur Hauptwelle 26 angeordnete Stellschrauben 62 für die Schneidmesser 28b ermöglichen ein Nachstellen der Schneiden der Schneidmesser 28b. Die Stellschrauben 62 liegen mit ihren Köpfen rückseitig am zugehörigen Schneidmesser 28b an und stehen mit dem Schneidmesserträger 28a im Gewindeeingriff. In der eingestellten Position sind sie durch eine Schraubenmutter gesichert, die an einer zu den Spannschrauben 58 parallelen Schulter des Schneidmesserträgers 28a anliegt. Die Schneidmesser 28b arbeiten mit radialen Gegenschneiden 28c zusammen. Zwischen den radialen Flanschen 60,61 sind Lagerstücke 28f für die Gegenschneiden 28c angeordnet. Die Gegenschneiden 28c sind mittels Spannstücken 28g und Spannschrauben 56 mit radialen Anlageflächen der Lagerstücke 28f verspannbar, wie insbesondere aus Fig. 4 ersichtlich. Der Endabschnitt 50a des Förderrohres 50 ist mittels eines das Lager der Hauptwelle aufnehmenden Lagerflansches 63 abgeschlossen. Dieser taucht mit einem axialen Abschnitt geringeren Durchmessers zentrierend in diesen Endabschnitt 50a ein.

Aus obigem ergibt sich, daß die Hauptwelle 26 einen der Bedienungsseite der Kunststoff-Spritzgießmaschine zugewandten Endabschnitt 26e mit Lager 26d im Lagerflansch 63 aufweist, in einem rückseitig daran anschließenden Abschnitt 26b den Schneidmesserträger 28a trägt, in einem daran rückseitig anschließenden weiteren Abschnitt 26a die Förderwendel 27 aufnimmt, wobei der rückseitige (im Lager 25 aufgenommenen) Endabschnitt 26c die Abtriebswelle des Getriebes 24 bildet. Das Förderrohr 50 weist im Eingangsabschnitt einen als Einfallöffnung für das zu verkleinernde Kunststoffmaterial dienenden Ausschnitt 50b auf.

Im Endabschnitt 50a ist das Förderrohr 50 mit einem als Ausfallöffnung für das zerkleinerte Kunststoffmaterial versehen. Er erstreckt sich zwischen den diametralen Gegenschneiden 28c über einen Zentriwinkel von 180°. Dieser Ausschnitt 50c ist von einem Sieb 28e abgedeckt, das radiale Sieblöcher 28e' aufweist. Das Sieb 28e ist über radial abgebogene Ränder mittels tangentialer Spannschrauben 57 und mittels der Spannstücke 28g mit den Lagerstücken 28f verspannt. Das durch das Sieb 28e fallende zerkleinerte Kunststoffmaterial ist über ein zur Vertikalen geneigtes Leitblech 55 und einem die Rückwand des Regeneratbehälters 41 durchsetzenden Saugstutzen 54 zuleitbar. Dieser ist über ein koaxiales Zwischenstück 54b und eine die Rückwand 18c des Maschinenfußes M durchsetzenden Anschlußstutzen 54a mit einem das Kunststoffmaterial abführenden Saugrohr verbunden, welch letzteres zeichnerisch nicht dargestellt ist.

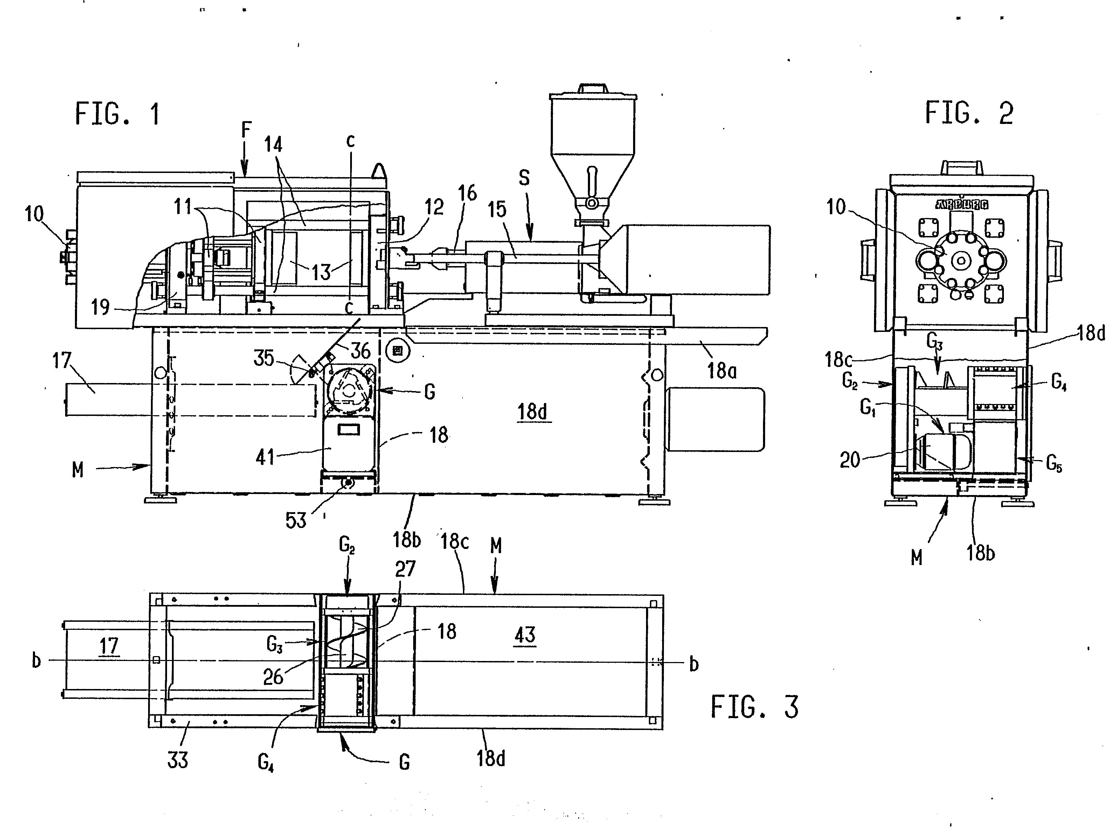

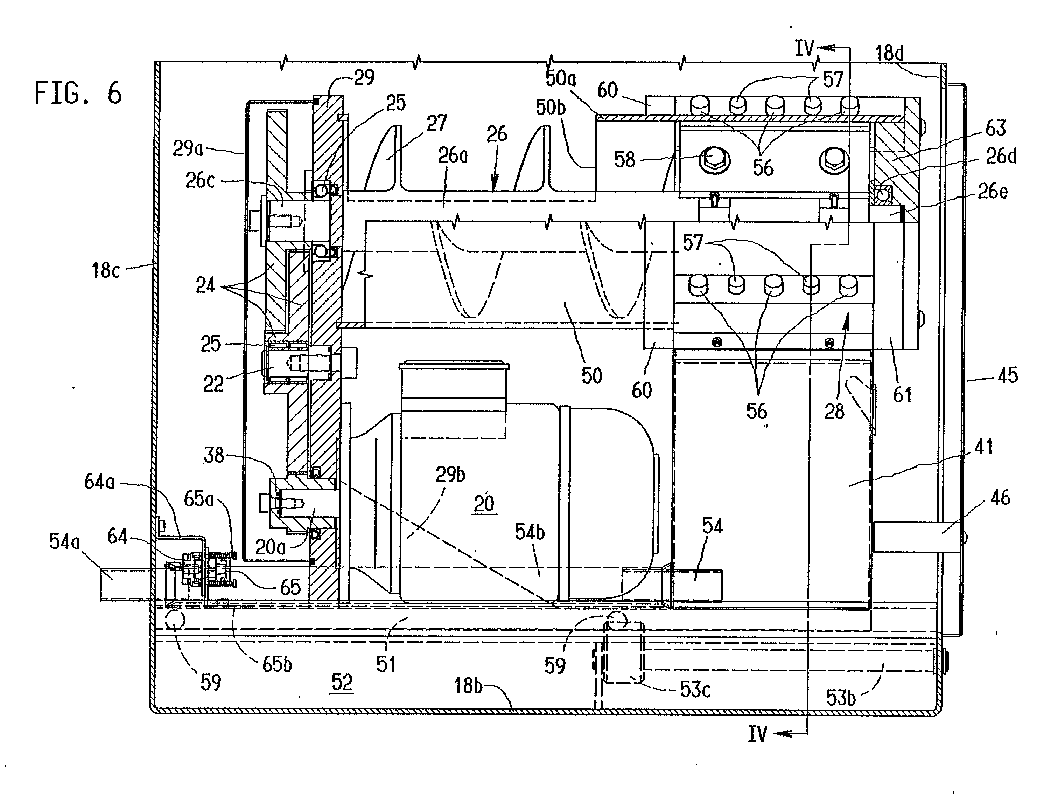

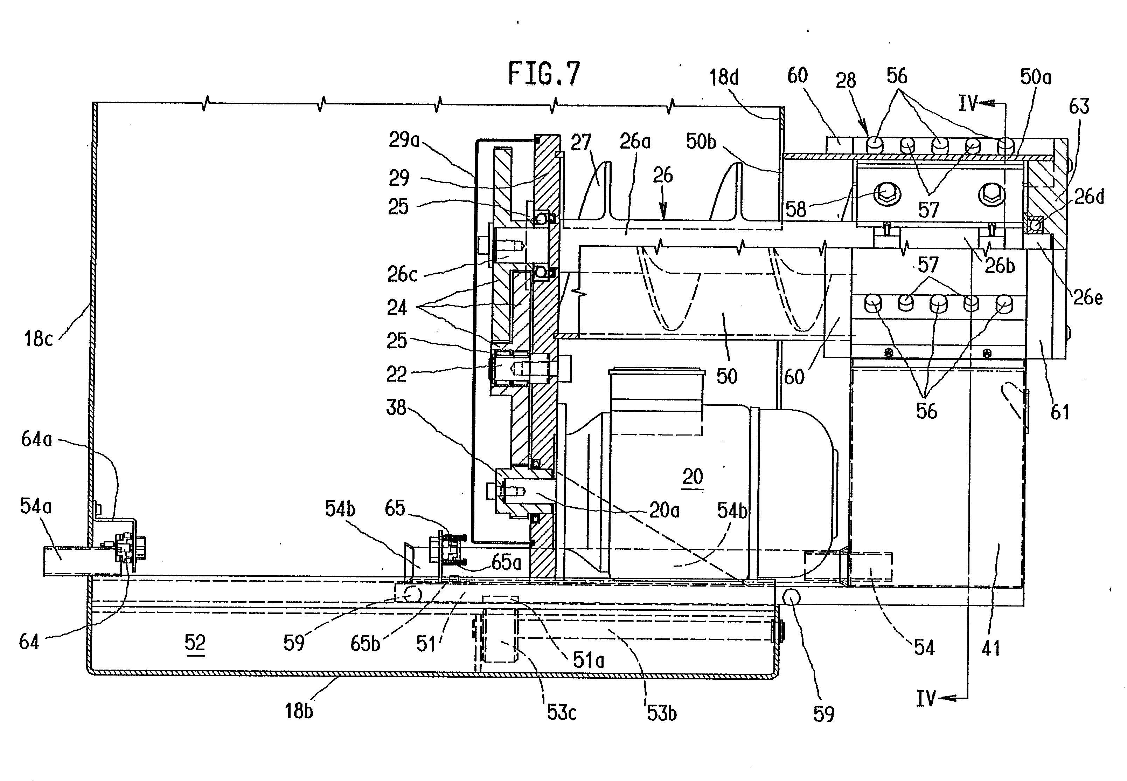

Wie insbesondere aus den Fign. 2 und 3 ersichtlich, ist die bauliche Einheit G somit in einem Antriebsteil G1, einen Getriebeteil G2, einen Förderteil G3 und ein Schneidwerkteil G4 sowie einen Behälterteil G5 gegliedert. Die bauliche Einheit G ist mittels Laufrollen 59 im Führungsteil 52A eines mit dem Maschinenfuß M verbundenen Sockels 52 quer zur Schließrichtung der Formschließeinheit F aus dem Maschinenfuß M (mit Boden 18b) herausziehbar. Zu diesem Zweck sind Laufrollen 59 an den Längsseiten der Basisplatte 51 gelagert. Im Maschinenfuß M ist die bauliche Einheit G mit Hilfe einer Verriegelungseinrichtung 53 in Arbeitsposition arretierbar. Diese Verriegelungseinrichtung 53 umfaßt einen als Riegel dienenden Exzenter 53c, der auf einer in der Symmetrieebene a-a liegenden Welle 53b des Sockels 52 fest aufsitzt. Durch Drehung der Welle 53b (mittels Innensechskant 53a) ist der Exzenter 53c in einen korrespondierenden Ausschnitt 51a der Basisplatte in Arretierposition einsteuerbar. Die Abmessungen und die Anordnung des Exzenters 53c ist derart, daß dieser in Arretierposition die Basisplatte 51 zur axialen Arretierung der Einheit G nach oben, also gegen die Rollenführungen des Führungsteiles 52A drückt. Ein elektrischer Anschluß für den Antriebsmotor 20 ist durch die Einschubbewegung bzw. Ausziehbewegung der Einheit G herstellbar bzw. Aufhebbar. Der eine Kontaktteil 64 des Anschlusses ist an der Rückwand 18c des Maschinenfußes M und der andere Kontaktteil 65 an der Basisplatte 51 befestigt. Zur Befestigung des Kontaktteiles 64 dient ein mit der Rückwand 18c verschraubtes Winkelblech 64a, zur Befestigung des Kontaktteiles 65 ein mit der Basisplatte verschraubtes Winkelblech 65b, wobei dieses Kontaktteil 65 mit Hilfe von Schraubenfedern 65a am vertikalen Schenkel des Winkelbleches 65b federnd gelagert ist, wie insbesondere aus den Fign. 6,7 ersichtlich. Ein dem Seitenriß der baulichen Einheit G entsprechender Ausschnitt aus der bedienungsseitigen Wand 18d des Maschinenfußes M ist mit Hilfe einer Tür 45 abschließbar. Ein an der Türe 45 angeordneter Sicherheitsschalter 46 beherrscht den Stromkreis des Antriebsmotors 20, indem er beim Öffnen bzw. Schließen der Türe 45 den Sicherheitsschalter 46 betätigt und dadurch den Stromkreis des Antriebsmotors trennt bzw. schließt.

Die in der baulichen Einheit G angeordnete Zerkleinerungseinrichtung und die mechanische Weiche (Schwenkachse 35 und Platte 36) sind vom zentralen Rechner der Kunststoff-Spritzgießmaschine derart steuerbar, daß unbrauchbare Spritzlinge, die von diesem Rechner durch den fehlerhaften Ablauf eines Fertigungsparameters erkannt sind, unmittelbar in die Zerkleinerungseinrichtung geleitet werden. Der unter dem Schneidwerk auf der Basisplatte 51 abgestellte Regeneratbehälter 41 ist als ausziehbare Schublade mit Handgriff ausgebildet. Er ist daher auch manuell entleerbar, wobei in diesem Falle das Leitblech 55 zweckmäßigerweise aus dem Regeneratbehälter 41 herausgenommen wird.

**Ansprüche**

1. Kunststoff-Spritzgießmaschine auf deren Maschinenfuß eine horizontale Formschließeinheit und eine Spritzgießeinheit angeordnet sind, mit einer Vorrichtung (Separierungsvorrichtung) zum Separieren der Angüsse von den aus der Spritzgießform kommenden Spritzlingen, mit einer in den Maschinenfuß unterhalb der Spritzgießform eingebauten Zerkleinerungseinrichtung für die Angüsse, die ein mit Antriebsmotor betriebenes Schneidwerk, eine die Angüsse zum Schneidwerk befördernde, quer zur Schließrichtung der Formschließeinheit angeordnete und über eine Untersetzung vom Antriebsmotor angetriebene Förderschnecke sowie einen unter dem Schneidwerk angeordneten Behälter (Regeneratbehälter) umfaßt, und mit einer die Spritzlinge linear abtransportierenden Fördervorrichtung, die auf der von der Spritzgießeinheit abgewandten Seite der Zerkleinerungseinrichtung angeordnet ist, dadurch gekennzeichnet, daß Förderschnecke (27,50) und Schneidwerk (28) eine gemeinsame Antriebswelle (Hauptwelle 26) aufweisen und der Antriebsmotor (20) parallel zur Förderschnecke (27,50) und unter dieser angeordnet ist, wobei Förderschnecke (27,50) Schneidwerk (28), Regeneratbehälter (41) und Antriebsmotor (20) eine quaderförmige quer zur Schließrichtung der Formschließeinheit verfahrbare Einheit (G) bilden, deren Breite in Schließrichtung der Formschließeinheit durch den Durchmesser des Antriebsmotors (20) bzw. der Förderschnecke (27,50) bestimmt ist.

2. Kunststoff-Spritzgießmaschine nach Patentanspruch 1, dadurch gekennzeichnet, daß die Achse (Motorachse 20a) des Antriebsmotors (20) und die Hauptwelle (26) in einer gemeinsamen vertikalen Ebene (a-a) liegen.

3. Kunststoff-Spritzgießmaschine nach Patentanspruch 2, dadurch gekennzeichnet, daß die vertikale Ebene (a-a) die Symmetrieebene der Einheit (G) ist, deren Hauptwelle (26) über ein Getriebe (24) antreibbar ist, deren Vorlegewelle (22) in dieser Symmetrieebene liegt.

4. Kunststoff-Spritzgießmaschine nach einem der Patentansprüche 1 bis 3, dadurch gekennzeichnet, daß das tragende Skelett der baulichen Einheit (G) durch eine horizontale Basisplatte (51), eine die Getriebewellen aufnehmende und mit der Basisplatte (51) starr verbundene Getriebeplatte (29) und das zur Hauptwelle (26) koaxial und an der Getriebeplatte (29) befestigte, das Schneidwerk (28) frei tragende Förderrohr (50) der Förderschnecke (27,50) gebildet ist.

5. Kunststoff-Spritzgießmaschine nach Patentanspruch 4, dadurch gekennzeichnet, daß die Getriebeplatte (29) durch Versteifungswinkel (29b) motorseitig abgestützt ist.

6. Kunststoff-Spritzgießmaschine nach einem der vorhergehenden Patentansprüche, dadurch gekennzeichnet, daß das Gehäuse des Schneidwerkes (28) durch den freien Endabschnitt (50a) des Förderrohres (50) der Förderschnecke (27,50) gebildet ist.

7. Kunststoff-Spritzgießmaschine nach einem der Patentansprüche 2 bis 6, dadurch gekennzeichnet, daß die zur Hauptwelle (26) tangentialen, mittels Spannschrauben (58) mit dem Schneidmesserträger (28a) verspannten und mittels entsprechend tangentialen Stellschrauben (62) verstellbaren Schneidmesser (28b) mit radialen Gegenschneiden (28c) zusammenarbeiten.

8. Kunststoff-Spritzgießmaschine nach einem der Patentansprüche 4 bis 7, dadurch gekennzeichnet, daß das Schneidwerk (28) von zwei den Endabschnitt (50a) des Förderrohres (50) umschließenden radialen Flanschen (60,61) axial begrenzt ist, die mit dem Mantel des Förderrohres (50) fest verbunden sind und deren Umfang etwa ein Quadrat beschreibt.

9. Kunststoff-Spritzgießmaschine nach Patentanspruch 8, dadurch gekennzeichnet, daß zwischen den radialen Flanschen (60,61) Lagerstücke (28f) für die Gegenschneiden (28c) angeordnet sind, welche mittels Spannstücken (28g) und Spannschrauben (56) mit radialen Anlageflächen der Lagerstücke (28f) verspannbar sind.

10. Kunststoff-Spritzgießmaschine nach Patentanspruch 9, dadurch gekennzeichnet, daß der Endabschnitt (50a) des Förderrohres (50) mittels eines des Lager der Hauptwelle (26) aufnehmenden Lagerflansches (63) abgeschlossen ist, der mit einem axialen Abschnitt geringeren Durchmessers zentrierend in diesem End-abschnitt (50a) eintaucht.

11. Kunststoff-Spritzgießmaschine nach einem der vorhergehenden Patentansprüche, dadurch gekennzeichnet, daß das Förderrohr (50) der Förderschnecke (27,50) im Eingangsabschnitt einen als Einfallöffnung für das zu verkleinernde Kunststoffmaterial dienenden Ausschnitt (50b) und im Endabschnitt (50a) einen von einem, Sieb (28e) abgedeckten, als Ausfallöffnung für das zerkleinerte Kunststoffmaterial dienenden Ausschnitt aufweist, der sich zwischen den diametralen Gegenschneiden (28c) erstreckt.

12. Kunststoff-Spritzgießmaschine nach Patentanspruch 11, dadurch gekennzeichnet, daß das durch das Sieb (28e) fallende zerkleinerte Kunststoffmaterial über ein zur Vertikalen geneigtes Leitblech (55) einem die Rückwand des Regeneratbehälters (41) durchsetzenden Saugstutzen (54) zuleitbar ist, welcher über ein koaxiales Zwischenstück ( 54b) und einen die Rückwand (18c) des Maschinenfußes (M) durchsetzenden Anschlußstutzen (54a) mit einem das Kunststoffmaterial abführenden Saugrohr verbunden ist.

13. Kunststoff-Spritzgießmaschine nach einem der vorhergehenden Patentansprüche, dadurch gekennzeichnet, daß die bauliche Einheit (G) mittels Laufrollen (59) im Führungsteil (52A) eines mit dem Maschinenfuß (M) verbundenen Sockels (52) quer zur Schließrichtung der Schließeinheit aus dem Maschinenfuß (M) herausziehbar ist, welche Laufrollen an den Längsseiten einer Basisplatte (51) der Einheit (G) gelagert sind.

14. Kunststoff-Spritzgießmaschine nach Patentanspruch 13, dadurch gekennzeichnet, daß die bauliche Einheit (G) im Maschinenfuß (M) mit Hilfe einer Verriegelungseinrichtung (53) in Arbeitsposition arretierbar ist.

15. Kunststoff-Spritzgießmaschine nach Patentanspruch 14, dadurch gekennzeichnet, daß die Verriegelungseinrichtung einen als Riegel dienenden Exzenter (53c) umfaßt, der auf einer in der Symmetrieebene der Einheit (G) im Sockel (52) gelagerten Welle (53b) fest aufsitzt und durch Drehung der Welle (53b) in einen korrespondierenden Ausschnitt in Arretierposition einsteuerbar ist.

16. Kunststoff-Spritzgießmaschine nach Patentanspruch 15, gekennzeichnet durch eine solche Anordnung des Exzenters, daß dieser in Arretierposition die Basisplatte (51) zur axialen Arretierung der Einheit (G) nach oben und gegen die Rollenführungen des Führungsteiles (52A) drückt.

17. Kunststoff -Spritzgießmaschine nach einem der Patentansprüche 4 bis 16 , dadurch gekennzeichnet, daß ein elektrischer Anschluß für den Antriebsmotor ( 20) durch die Bewegung der Einheit (G) herstellbar bzw. aufhebbar ist, wobei der eine Kontaktteil (64) an der Rückwand (18c) des Maschinenfußes ( M) und der andere Kontaktteil (65) an der Basisplatte (51) befestigt sind.

18. Kunststoff-Spritzgießmaschine nach einem der vorhergehenden Patentansprüche, dadurch gekennzeichnet, daß ein dem Seitenriß der baulichen Einheit (G) entsprechender Ausschnitt aus der bedienungsseitigen Wand des Maschinenfußes ( M) mit Hilfe einer Tür (45) abschließbar und ein den Stromkreis des Antriebsmotors ( 20) beherrschender Sicherheitsschalter (46) vorgesehen ist, der beim Öffnen bzw. Schließen der Türe (45) den Sicherheitsschalter betätigt.

19. Kunststoff-Spritzgießmaschine nach einem der vorhergehenden Patentansprüche, dadurch gekennzeichnet, daß ein als Fördervorrichtung für die Spritzlinge dienendes Förderband (17) symmetrisch zur Symmetrieeben (b-b) der Kunststoff-Spritzgießmaschine angeordnet ist.

20. Kunststoff-Spritzgießmaschine nach Patentanspruch 19, dadurch gekennzeichnet, daß die dem Förderband (17) zugewandte Breitseite der baulichen Einheit ( G) etwa in einer durch die Trennebene ( c-c) der geschlossenen Spritzgießform (13) gehenden Ebene (c-c) liegt und die horizintale Schwenkachse (35 )einer mechanischen Weiche zum Separieren der Angüsse von den Spritzlingen etwa in dieser vertikalen Ebene angeordnet ist.

21. Kunststoff-Spritzgießmaschine nach Patentanspruch 20 , dadurch gekennzeichnet, daß die mechanische Weiche durch ein auf der Schwenkachse (35) sitzende Platte (36) mit Rutschflächen an beiden Seiten gebildet ist.

22. Kunststoff-Spritzgießmaschine nach einem der vorhergehenden Patentansprüche, dadurch gekennzeichnet, daß die in der baulichen Einheit (G) angeordnete Zerkleinerungsvorrichtung und die mechanische Weiche (Schwenkachse 35 und Platte 36) vom zentralen Rechner der Kunststoff-Spritzgießmaschine derart steuerbar sind, daß unbrauchbare Spritzlinge, die vom Rechner durch den fehlerhaften Ablauf eines Fertigungsparameters erkannt sind, von der mechanischen Weiche in die Zerkleinerungseinrichtung geleitet werden.

23. Kunststoff-Spritzgießmaschine nach einem der vorhergehenden Patentansprüche, dadurch gekennzeichnet, daß der Regeneratbehälter (41) als eine ausziehbare Schublade ausgebildet ist.

24. Kunststoff-Spritzgießmaschine nach einem der Patentansprüche 12 bis 23, dadurch gekennzeichnet, daß das Sieb (28e) über radial abgebogene Ränder mittels tangentialer Spannschrauben und der Spannstücke (28g) mit den Lagerstücken (28f) verspannbar ist.

FIG. 1

FIG. 2

FIG. 3

0 266 584

FIG. 4

FIG.5

0 266 584

FIG. 6

0 266 584

# FIG.7

0 266 584